(19) **Europäisches Patentamt**

**European Patent Office**

**Office européen des brevets**

(11) **EP 1 420 045 A1**

(12) **DEMANDE DE BREVET EUROPEEN**

| | |
|---|---|
| (43) Date de publication:<br>**19.05.2004 Bulletin 2004/21** | (51) Int Cl.7: **C08L 23/02**, C08L 23/12 |

(21) Numéro de dépôt: **03292818.6**

(22) Date de dépôt: **13.11.2003**

| | |
|---|---|
| (84) Etats contractants désignés:<br>**AT BE BG CH CY CZ DE DK EE ES FI FR GB GR HU IE IT LI LU MC NL PT RO SE SI SK TR**<br>Etats d'extension désignés:<br>**AL LT LV MK** | (72) Inventeurs:<br>• **Porret, Laurent**<br>  **68180 Horbourg-Wihr (FR)**<br>• **Coste, Jean-Philippe**<br>  **68240 Kayserberg (FR)** |
| (30) Priorité: **15.11.2002 FR 0214338** | (74) Mandataire: **Bernasconi, Jean Raymond et al**<br>**c/o Cabinet Lavoix,** |
| (71) Demandeur: **KAYSERSBERG PACKAGING**<br>**68320 Kunheim (FR)** | **2, Place d'Estienne d'Orves**<br>**75441 Paris Cedex 09 (FR)** |

(54) **Plaque avec résistance au feu améliorée**

(57)    Plaque en polyoléfine constituée d'un mélange d'un homopolymère, d'un copolymère et d'un retardateur de flamme, ayant une résistance au feu M1 ou M2 selon la norme MF P92-505.

## Description

La présente invention concerne généralement des plaques pleines ou alvéolaires à base de polyoléfine présentant une résistance au feu M1 ou M2 selon la norme française NF P92-505.

Ces plaques sont notamment utilisées dans le secteur du bâtiment et également en tant que support de publicité pour les établissements recevant du public.

L'utilisation de matériaux synthétiques dans le secteur du bâtiment est assortie à une exigence de résistance au feu élevée. Afin d'obtenir la permission d'utilisation pour le secteur du bâtiment, le matériau synthétique doit surmonter le test de résistance au feu selon la norme NF P92-505 et obtenir un classement M1 ou M2. Pour déterminer le classement exact, on utilisera la norme NF P92-501.

Les mêmes exigences sont valables pour l'utilisation de matériaux synthétiques en tant que supports de publicité pour les établissements recevant du public.

Il est connu que les plaques en PVC remplissent ces exigences et sont donc utilisées pour les propos cités ci-dessus. Malheureusement la fabrication du PVC ainsi que sa gestion après son utilisation posent des problèmes écologiques.

Les matériaux à base de polyoléfine présentent moins de problèmes écologiques lors de leur fabrication et de la gestion après utilisation. Toutefois, il est également connu que la résistance au feu propre des plaques à base de polyoléfine ne permet d'obtenir qu'un classement de résistance au feu M4 selon la norme française NF P92-505, ce qui empêche une mise en place de ces plaques dans le secteur du bâtiment et en tant que support de publicité dans les bâtiment recevant du public.

La résistance au feu des plaques à base de polyoléfine peut être améliorée en ajoutant des additifs ignifuges ou des retardateurs de flammes. Toutefois, l'ajout d'additifs ignifuges ou de retardateurs de flammes provoque la perte de propriétés mécaniques, telles que la résistance en flexion. En même temps la plaque perd ses propriétés optiques, voir esthétiques par la formation par exemple de points noirs, d'infondus, de peau d'orange ou de stries ce qui peut empêcher une bonne impression, notamment dans le secteur du support de communication.

En outre, il faut une quantité importante d'additifs ignifuges ou de retardateur de flammes afin d'obtenir un classement de résistance au feu M1 ou M2 selon la norme française NF P92-505 Ainsi, il faut utiliser des matières compoundées ignifuges à 100% ou ajouter des quantités d'additifs supérieurs à 20%. Les additifs ignifuges et les retardateurs de flammes étant chers, le prix de ces plaques à base de polyoléfine classées M1 ou M2 ne peut pas être compétitif vis-à-vis des plaques en PVC.

L'invention se propose donc de fournir des plaques à base de polyoléfine ayant un classement de résistance au feu M1 ou M2 selon la norme française NF P92-505, tout en gardant les bonnes propriétés mécaniques et optiques et un prix compétitif.

On connaît déjà des matériaux à base de résine synthétique présentant des compositions destinées à améliorer la résistance au feu.

Ainsi, le brevet US 5 824 727 décrit un matériau sous forme de feuille comprenant un homopolymère de polypropylène, un copolymère de polypropylène, un retardateur de flammes et un polymère d'éthylène réticulé, destiné notamment à améliorer la fabrication par augmentation de viscosité, ce matériau comprenant encore une très importante charge organique et surtout inorganique.

La présente invention concerne une plaque destinée à avoir une certaine rigidité, et non pas une feuille, et évite au contraire toute utilisation de polymère éthylénique réticulé et/ou produit similaire.

Les demandes WO 01/48 075, 00/12 620 et EP 0 779 333 décrivent des compositions de polyoléfine résistantes au feu et comprenant, notamment, des polyoléfines thermoplastiques ou une importante quantité de polyéthylène basse densité. Au contraire, la présente invention veut éviter l'utilisation de matériaux élastomères ainsi que de matériaux tels que des polyéthylènes basse densité.

L'invention a pour objet une plaque pleine ou alvéolaire à base de polyoléfine constituée d'un mélange d'un homopolymère, d'un copolymère et d'un retardateur de flammes, permettant d'obtenir un classement de résistance de feu M1 ou M2 selon la norme française NF P92-505. Cette augmentation surprenante de la résistance au feu pourrait être due, en partie au fait que l'addition de l'homopolymère augmente la fluidité du mélange polymère lors du chauffage. D'une part, il se forme une croûte (matière carbonisée) en surface de la plaque qui retarde l'inflammation du matériau. D'autre part, pendant ce temps, cela favorise la fluidité de la matière qui peut alors goutter ou s'étirer en fins filaments avant le début de l'inflammation, favorisant l'obtention des classements M1 ou M2.

Dans une forme de réalisation particulière, la plaque à base de polyoléfine est une plaque alvéolaire avec une couverture supérieure reliée par des parois verticales et/ou inclinées à une couverture inférieure, caractérisée par un couple épaisseur-grammage de 10 mm-2000 $g/m^2$, 3,5 mm-650 $g/m^2$ ou 3 mm-450 $g/m^2$.

Dans une autre forme de réalisation, la plaque à base de polyoléfine est une plaque pleine caractérisée par son épaisseur de 0,5 à 1,5 mm, de préférence de 0,8 mm.

D'une manière avantageuse, la plaque contient de 10 à 50 %, de préférence 15 à 30 % en poids d'homopolymère, de 30 à 70 % en poids de copolymère, y compris éventuellement de 5 à 20 % de copolymère chargé de talc, et de 5 à 30 % en poids de retardateur de flammes. De préférence la plaque contient 10 à 20 % en poids de retardateur de flammes et encore de préférence 14 % en poids de retardateur de flamme.

D'une façon générale, la fluidité du matériau polymère augmente avec la quantité d'homopolymère ajouté. De préférence, le rapport massique entre homopolymère et copolymère est de 0,2 à 0,3, notamment 0,24.

On peut également ajouter à la composition de la plaque de 1 à 7 % en poids d'un colorant, de préférence d'un colorant blanc.

Dans une forme de réalisation préférée, l'homopolymère est du polypropylène. Avantageusement l'homopolymère peut aussi être choisi parmi GRN 75 de Bolloré, 5660 de FINA, 100 GA 02 de BP.

Avantageusement, le copolymère peut aussi être choisi parmi 3660 de FINA, 83 EK 10 de DSM, PB 130 GIF de Repsol.

Dans une forme de réalisation particulière, on utilise un couple particulier d'homopolymère et de copolymère choisi parmi le GRN 75 et le 3660 associé à un copolymère chargé talc par exemple tel que MB 475 U de Borealis ou PM 440 de Repsol.

Afin de minimiser le coût des plaques l'homopolymère et le copolymère peuvent être de 30 à 100 % en poids des polymères recyclés. De préférence on utilise un homopolymère recyclé et encore de préférence du polypropylène recyclé.

L'homopolymère et/ou le copolymère peuvent être additionnés de 5 à 30 % en poids d'une charge minérale.

L'invention a également pour objet l'utilisation de ces plaques pour l'augmentation de la résistance au feu dans le secteur du bâtiment, ou le support de publicité dans les établissements recevant du public.

Exemples :

A titre d'exemple, la plaque a la composition suivante :

- 83 % en poids de mélange de copolymère à 67 % en poids et d'homopolymère à 16 %, les 67 % de copolymère se décomposant en 57 % de copolymère type 3660 et 10 % de copolymère chargé talc ;
- 14 % en poids de retardateur de flammes ;
- 3 % en poids de colorant blanc.

Le copolymère utilisé est par exemple un copolymère séquencé (p. ex. 3660 de FINA) et le homopolymère est un homopolymère régénéré (p. ex. GRN 75 de Bolloré).

Avec cette composition, on a réalisé des plaques alvéolaires constituées d'une couverture supérieure reliée par des parois verticales à une couverture inférieure caractérisée par un couple épaisseur-grammage de 10 mm-2000 g/m$^2$, 3.5 mm-650 g/m$^2$ et 3 mm-450 g/m$^2$. Ces plaques sont vendues par la société Kaysersberg Plastics sous la dénomination AKYLUX ou AKYPLAC.

Avec la même composition, on a également réalisé des plaques pleines caractérisées par leur épaisseur de 0,5 à 1,5 mm, notamment de 0,8 mm. Ces plaques sont disponibles dans le commerce sous la dénomination AKYPLEN de la société Kaysersberg Plastics.

Avec ces plaques, on a réalisé les tests de résistance au feu selon la NF P92-505 auprès d'organismes officiel tels que la Préfecture de Police ou la Société Nationale des Poudres et Explosifs. On a obtenu le classement suivant :

|  | 10-2000 | 3,5-650 | 3-450 | 0,8 mm |
|---|---|---|---|---|
| Classement feu selon NF P92-505 | M2 | M1 | M1 | M1 |

Les propriétés mécaniques des plaques selon l'invention par rapport aux plaques en polyoléfine standards ont été déterminées par des mesures de résistance mécanique en flexion adaptées selon ISO 178. On a constaté que les plaques selon l'invention montrent un même ordre de grandeur des propriétés mécaniques.

|  | 3,5-650 standard | 3-450 standard | 10-2000 standard | 3,5-650 M1 | 3-450 M1 | 10-2000 M2 |
|---|---|---|---|---|---|---|
| Module de Flexion (N/mm) | 3,6 | 2,0 | 73 | 3,6 | 1,9 | 70 |
| Rupture en Flexion (N) | 33 | 19 | 362 | 32 | 19 | 357 |

Un autre avantage des plaques selon l'invention est qu'elles permettent une aussi bonne impression que les plaques en polyoléfine standards. La qualité de la surface des plaques est estimée par une mesure de la rugosité de surface selon un test Bendtsen Adapté selon NF Q03-049.

|  | 3,5-650 standard | 3-450 standard | 3,5-650 M1 | 3-450 M1 |
|---|---|---|---|---|
| Rugosité (cm$^3$/mm) | 550-800 | 550-850 | 600-850 | 600-850 |

Les plaques selon l'invention présentent donc une résistance au feu améliorée tout en gardant les bonnes caractéristiques mécaniques et optiques des plaques en polyoléfine standards. Par plaques en polyoléfine standards on comprend les plaques en polyoléfine sans retardateur de flamme additionné.
Le détail des normes mises en oeuvre selon l'invention est le suivant.

Essai pour matériau fusible NF P 92-505

L'éprouvette de dimensions 70 * 70 mm disposée sur une grille métallique définie est soumise au rayonnement calorifique d'un épiradiateur situé à 30 mm au-dessus.
Pendant 5 minutes, l'épiradiateur est écarté à chaque inflammation de l'éprouvette, puis remis en place sur celle-ci après extinction. Pendant 5 minutes supplémentaires, l'épiradiateur reste en place sur l'éprouvette.
Les éléments déterminants sont : la chute de gouttes enflammées ou non, l'inflammation ou non de la ouate de cellulose disposée sous l'éprouvette, en cas d'inflammation le classement s'oriente M3-M4 si pas d'inflammation M1-M2.
Et de façon à connaître le classement réel, on utilise la norme NF P 92 501 :
    Cet essai consiste à soumettre, dans des conditions définies, des éprouvettes planes du matériau à l'action d'une source de chaleur rayonnante électrique (épiradiateur) et à provoquer éventuellement l'inflammation des gaz dégagés, une propagation de la combustion.
L'éprouvette du matériau de dimensions 400 * 300 mm disposée à 45° par rapport à l'horizontale est soumise à un éclairement énergétique défini, émis par un épiradiateur dont la surface radiante est à 30 mm du plan inférieur de l'éprouvette et parallèle à ce dernier. Les gaz libérés par la pyrolyse du matériau passent au contact d'inflammateurs disposés de part et d'autre de l'éprouvette.
    On mesure les temps d'inflammation égaux et supérieurs à 5 secondes, la durée totale de la combustion effective sur les deux faces et les longueurs de flammes relevées toutes les 30 secondes. Chaque essai dure 20 minutes.
En fonction de la valeur des paramètres relevés, les matériaux sont classés en M0, M1, M2, M3 ou M4, ces critères étant définis par le CECMI (Comité d'Etude et de Classification des Matériaux et éléments de construction par rapport au danger d'Incendie).

Critères de classement

    1) Pas d'inflammation effective (< 5 secondes)

    -    pouvoir calorifique < 2.5 MJ / kg : M0
    -    pouvoir calorifique > 2.5 MJ / kg : M1

    2) Inflammation avec indice q
    q : indice calculé à partir d'une relation établie de la façon suivante :

$$q = 100 * H / (t_i * T^{1/2}) \text{ où :}$$

    H : somme des hauteurs de flamme
    ti : moment d'inflammation
    T : durée totale de la combustion

| Essai de rayonnement Valeur de q | Classement M |
|---|---|
| < 2.5 | M1 |
| < 15 | M2 |
| < 50 | M3 |
| > 50 et vitesse de propagation < 2 mm/s | M4 |
| > 50 et vitesse de propagation > 2 mm/s | NC |

**Revendications**

1. Plaque en polyoléfine constituée d'un mélange d'un homopolymère, d'un copolymère et d'un retardateur de flamme, ayant une résistance au feu M1 ou M2 selon la norme NF P92-505.

2. Plaque selon la revendication 1 **caractérisée en ce que** ladite plaque est une plaque alvéolaire avec une couverture supérieure reliée par des parois verticales à une couverture inférieure, **caractérisée par** un couple épaisseur-grammage de 10 mm-2000 $g/m^2$, 3,5 mm-650 $g/m^2$ ou 3 mm-450 $g/m^2$.

3. Plaque selon la revendication 1 **caractérisée en ce que** ladite plaque est une plaque pleine **caractérisée par** son épaisseur de 0,5 à 1,5 mm., de préférence de 0,8 mm.

4. Plaque selon la revendication 3 **caractérisée par** son épaisseur 0,8 mm.

5. Plaque selon l'une des revendications 1-4 **caractérisée en ce que** ladite plaque contient de 30 à 70 % en poids de copolymère, éventuellement de 5 à 20 % de copolymère chargé talc, de 10 à 50 % en poids d'homopolymère et de 5 à 30 % en poids de retardateur de flamme.

6. Plaque selon la revendication 5 **caractérisée en ce que** ladite plaque contient 10-20 % en poids de retardateur de flamme.

7. Plaque selon la revendication 5 **caractérisée en ce que** ladite plaque contient 14 % en poids de retardateur de flamme.

8. Plaque selon l'une des revendications 1-7 **caractérisée en ce que** le rapport massique entre homopolymère et copolymère est de 0,24.

9. Plaque selon l'une des revendications 1-8 **caractérisée en ce que** ladite plaque contient de 1 à 7 % en poids d'un colorant.

10. Plaque selon la revendication 9 **caractérisée en ce que** ledit colorant est un colorant blanc.

11. Plaque selon l'une des revendications 1-10 **caractérisée en ce que** l'homopolymère est du polypropylène.

12. Plaque selon l'une des revendications 1-10 **caractérisée en ce que** l'homopolymère et le copolymère sont de 30 à 100 % en poids des polymères recyclés.

13. Plaque selon l'une des revendications 1-10 **caractérisée en ce que** l'homopolymère est de 30 à 100 % en poids un homopolymère recyclé.

14. Plaque selon la revendication 13 **caractérisée en ce que** ledit homopolymère recyclé est du polypropylène recyclé.

15. Plaque selon l'une des revendications 1-14 **caractérisée en ce que** ladite plaque est composée de 67 % de copolymère, de 16 % d'homopolymère, de 14 % de retardateur de flamme et de 3 % de colorant blanc.

16. Utilisation de plaque selon l'une des revendications 1-15 pour l'augmentation de la résistance au feu dans le secteur du bâtiment.

17. Utilisation de plaque selon l'une des revendications 1-15 pour l'augmentation de la résistance au dans le support de publicité.

EP 1 420 045 A1

**Office européen des brevets**

**RAPPORT DE RECHERCHE EUROPEENNE**

Numéro de la demande

EP 03 29 2818

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 824 727 A (KONOW ANDERS ET AL) 20 octobre 1998 (1998-10-20) * colonne 4, ligne 44 - ligne 45; revendications; tableaux * ----- | 1,5-16 | C08L23/02 C08L23/12 |
| X | WO 01/48075 A (GOBERTI PAOLO ;ZUCCHELLI UGO (IT); BRAGA VITTORIO (IT); MARCHINI R) 5 juillet 2001 (2001-07-05) * page 1, ligne 3 - ligne 4 * * page 7, alinéa 3; revendications 1,4-7; tableau 1 * ----- | 1,5-14, 16 | |
| X | WO 00/12620 A (YASAKA NAOTO ;MITSUI CHEMICALS INC (JP)) 9 mars 2000 (2000-03-09) * abrégé * ----- | 1,12-14, 16,17 | |
| X Y | EP 0 779 333 A (CHISSO CORP ;LONSEAL KOGYO KK (JP)) 18 juin 1997 (1997-06-18) * revendications 1,6-9 * ----- | 1,5-8, 12-15,17 2-4 | |
| Y | US 4 361 613 A (BOGNER BEN R ET AL) 30 novembre 1982 (1982-11-30) * revendication 1 * ----- | 2-4 | DOMAINES TECHNIQUES RECHERCHES (Int.Cl.7) C08L |

Le présent rapport a été établi pour toutes les revendications

| Lieu de la recherche | Date d'achèvement de la recherche | Examinateur |
|---|---|---|
| La Haye | 15 mars 2004 | Clemente Garcia, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**　　　　EP 03 29 2818

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-03-2004

| Document brevet cité au rapport de recherche | | Date de publication | Membre(s) de la famille de brevet(s) | | Date de publication |
|---|---|---|---|---|---|
| US 5824727 | A | 20-10-1998 | CA | 2189198 A1 | 09-10-1997 |
| WO 0148075 | A | 05-07-2001 | AU | 2167801 A | 09-07-2001 |
| | | | BR | 0009969 A | 22-01-2002 |
| | | | CA | 2359817 A1 | 05-07-2001 |
| | | | CN | 1341141 T | 20-03-2002 |
| | | | WO | 0148075 A1 | 05-07-2001 |
| | | | EP | 1155080 A1 | 21-11-2001 |
| | | | JP | 2003518540 T | 10-06-2003 |
| | | | PL | 349363 A1 | 15-07-2002 |
| | | | US | 6673855 B1 | 06-01-2004 |
| WO 0012620 | A | 09-03-2000 | WO | 0012620 A1 | 09-03-2000 |
| EP 0779333 | A | 18-06-1997 | DE | 69608530 D1 | 29-06-2000 |
| | | | DE | 69608530 T2 | 18-01-2001 |
| | | | EP | 0779333 A2 | 18-06-1997 |
| | | | JP | 9194647 A | 29-07-1997 |
| | | | KR | 203220 B1 | 15-06-1999 |
| | | | TW | 408154 B | 11-10-2000 |
| | | | US | 5750600 A | 12-05-1998 |
| US 4361613 | A | 30-11-1982 | DE | 3234903 A1 | 07-04-1983 |
| | | | FR | 2513287 A1 | 25-03-1983 |
| | | | GB | 2106446 A | 13-04-1983 |
| | | | IT | 1189361 B | 04-02-1988 |
| | | | JP | 58065843 A | 19-04-1983 |

EPO FORM P0460

Pour tout renseignement concernant cette annexe : voir Journal Officiel de l'Office européen des brevets, No.12/82